# EUROPEAN PATENT APPLICATION

(11) **EP 2 263 861 A1**
(43) Date of publication of application: **22.12.2010**
(21) Application number: 09163127.5
(22) Date of filing: 18.06.2009
(51) Int. Cl.: B29C 67/00

(54) **Method and apparatus for making three-dimensional parts**

(71) Applicant: Tang Lee, Huey-Ru, Taipei 105 (TW)
(72) Inventor: Tang, Hwa-Hsing, Hsintien City Taipei County (TW)
(74) Representative: 2K Patentanwälte Blasberg Kewitz & Reichel

(57) **Abstract**

A method and apparatus for fabricating three-dimensional parts using a slurry is disclosed. The slurry comprises at least a polymer, an organic binder and a solvent. The process is characterized in paving the slurry to form a sacrificial layer, and drying the same so that it is in the form of a solid state. The sacrificial layer can be soaked in a developer for being disintegrated therein. On the other hand, if the sacrificial layer is irradiated with an energy beam, it will be transformed into a part layer which does not dissolve in the developer. During manufacture of a three dimensional part, by repeating the above steps, a preliminary three dimensional part surrounded by a sacrificial portion constituted of a plurality of sacrificial layers without being irradiated can be obtained. A developer is used to separate the sacrificial portion from the preliminary three-dimensional part so as obtain the resultant three-dimensional part. According to a preferred embodiment of the present invention, if the slurry further comprises a metal powder or a ceramic powder, the resultant three-dimensional part can be further processed to remove the organic component so as to obtain a three-dimensional semi-product consisting of mainly inorganic component. By processing inorganic component of the three-dimensional semi-product with a high temperature densification sintering step, a final three-dimensional part consisting of ceramic, metal or ceramic-metal composite with a high strength can be obtained.

## Description

### FIELD OF THE INVENTION

The present invention relates to a method and an apparatus for fabricating a three-dimensional part, particularly a polymer part, a metal part, a ceramic part and a metal-ceramic composite part.

### BACKGROUND OF THE INVENTION

Rapid prototyping fabrication can be used to fabricate three-dimension parts, such as Selective Laser Sintering (SLS).

US Patent No. 6,217,816 issued to Tang and entitled "Method for rapid forming of a ceramic work piece" discloses a method for rapid forming of a ceramic work piece including the following process: a) prepare a slurry by mixing an inorganic binder, ceramic powder and water together; b) pave the slurry into a slurry layer via a feeding device; c) after the slurry layer dries and forms into a green block, selectively irradiates the green block with high energy beam to melt it into a ceramic workpiece. By repeating the above steps, a three-dimensional workpiece can be obtained. Thereafter, by dispersing the green block, a ceramic workpiece can be obtained. No post-sintering process is required. This prior art can be used to manufacture ceramic or ceramic-metal workpiece. However, the workpiece has a strength about 20 MPa which is not good enough.

To overcome the above defects, there is a need to provide a method and apparatus for manufacturing a three-dimensional workpice to produce a workpiece that has better strength over the above-mentioned prior art so as to extend their use in the industry. Incidentally, it would be appreciated if the method and apparatus for manufacturing a three-dimensional workpice can be widely used in manufacturing a polymer workpiece, metal workpiece, ceramic workpiece or composite workpiece.

### SUMMARY OF THE INVENTION

According to the present invention, to obtain improved three-dimensional parts, a method for fabricating the same uses a slurry comprising at least a polymer powder, an organic binder and a solvent. The organic binder can dissolve in the solvent and the developer, whereas the polymer powder does not dissolve in the solvent and the developer. The slurry is paved on a surface so as to form a layer ("slurry layer"). After the evaporation of the solvent due to the drying of the slurry layer, the binder is bonded with the polymer powders and thereby a solidified sacrificial layer is formed. Since the polymer powders are bonded together by the binder, if the solidified layer is dispersed in a developer, the binder will lose its binding ability, causing the polymer powders to separate from each other and disperse in the developer or dispersant. With the above-mentioned unique features of the organic binder, polymer powder and solvent, a sacrificial portion is formed during the making of a three-dimensional workpiece. The sacrificial portion works as a support during the making of a three-dimensional part and removed by a developer when the three-dimensional part is finished.

The formation of the solidified sacrificial layer/ the green thin layer and the part layer during the manufacture of a three-dimensional workpiece of the present invention is explained below. During the making of a three-dimensional part, a slurry comprising the organic binder, the polymer powder and the solvent is paved into a "slurry layer" on a specified area of a working table and dried so as forms a "solidified sacrificial layer." If the sacrificial layer is irradiated with an energy beam, it will be transformed into a part layer which does not dissolve in the developer. This is because the polymer powder in the solidified sacrificial layer is melt or cross-linked and mixed with the organic binder and therefore becomes a mixed material which is not dissolved in the developer. The energy beam irradiates on the solidified sacrificial layer along a pre-determined path following the shape of a cross-section of an intended finished three-dimensional workpiece so that an irradiated portion of said solidified sacrificial layer is transformed into a part layer which is not dissolved in the developer.

The formation of a green block during the manufacture of a three-dimensional workpiece of the present invention is explained below. As indicated above, a predetermined portion of the solidified sacrificial layer, namely, the "irradiated portion," is irradiated by the energy beam and transformed into a "part layer," and the other portion of the solidified sacrificial layer that is not irradiated by the energy beam, namely, a "non-irradiated portion," remains as the original "sacrificial layer." Thereafter, repeat the above steps of forming a solidified sacrificial layer and of forming a part layer by irradiating a predetermined portion of the solidified sacrificial layer, and laminate each composite layers composed of the "solidified sacrificial layer " and "part layer" atop each other. Therefore, a laminated "three-dimensional part portion" constituted by the part layers is formed, wherein the adjacent upper and lower layers are bonded to each other. Therefore, the portions of adjacent upper and lower layers that are not irradiated, known as sacrificial layers, are also laminated together so as to constitute a "sacrificial portion." The "sacrificial portion" is usually made to surround the "three-dimensional part portion." The three-dimensional part portion and the sacrificial portion together constitute a "green block."

The formation of the three-dimensional workpiece by disintegrating or "demolishing" the sacrificial portion, as is explained below. The green block is soaked in a developer or "dispersant". Since the three-dimensional part portion of the green block does not dissolve in the developer, its shape and size is kept unchanged. On the other hand, the sacrificial portion of the green block is disintegrated in the developer because its binder is dispersed by the developer or dispersant and the polymer powder is separated from each other. By this process, the sacrificial portion of the green block can be removed and only the three-dimensional part portion is retained. A finished polymer workpiece can then be obtained by the post processing.

According to another aspect of the present invention, a polymer-inorganic composite workpiece can be obtained according to the above concept. To achieve this purpose, a slurry comprising at least a polymer powder, an organic binder and a solvent and additionally an inorganic powder (e.g., metal powder or ceramic powder) which is insoluble in the solvent and developer/dispersant is used. This slurry is advantageous in manufacturing a polymer-inorganic composite workpiece such as a polymer-ceramic composite workpiece, a polymer-metal compsite workpiece and a polymer-metal-ceramic composite workpiece. The method of manufacturing the three-dimensional workpiece is similar to that disclosed above method. Specifically, at first, the slurry with the above composition is paved on a surface so as to form a layer ("slurry layer"). After the evaporation of the solvent due to the drying of the slurry layer, the organic binder is bonded with the polymer powders and the inorganic powders, thereby a solidified sacrificial layer is formed. Thereafter, a predetermined portion of the solidified sacrificial layer is irradiated by the energy beam. The polymer powder in the irradiated portion of the solidified sacrificial layer is melt or cross-linked, and is mixed with the organic binder; therefore they become a mixed material which is insoluble in the developer and which is linked with the inorganic powder, so that the irradiated portion transforms into a "part layer." Thereafter, similar to the foregoing basic concept of the present invention, after the subsequent steps of forming a "green block" including a three-dimensional part portion and a sacrificial portion and of disintegrating the sacrificial portion, a three-dimensional polymer-inorganic composite workpiece can be obtained. Generally, the resultant three-dimensional polymer-inorganic composite workpiece introducing a slurry comprising "polymer powder, an organic binder and a solvent and additionally an inorganic powder" has differet properties and features from the first example using a slurry consisting of "polymer powder, an organic binder and a solvent" without an inorganic powder.

According to a preferred embodiment of the present invention, a preferred slurry is prepared by first coating the polymer material (which is insoluble in solvent and developer/dispersant) onto the surface of the inorganic powder (which is insoluble in solvent and developer/dispersant), and then mixing the resultant combined powder with the solvent and organic binder (which can be dissolved in solvent and developer/dispersant). The resultant slurry has the advantages of a more even mixture, of a lower organic binder content which can be dissolved in solvent and developer/dispersant, and of a higher polymer material content which is insoluble in solvent and developer/dispersant. This particular slurry helps to obtain a three-dimensional part portion with a better strength so that it will not be easily destroyed during the removal of the sacrificial portion.

The resultant three-dimensional polymer-inorganic composite part can be further processed in a sintering furnace to remove the organic component and then go through high temperature sintering so as to obtain a denser inorganic workpiece. If the inorganic powder of the slurry is selected from a metal powder, a metal workpiece can be obtained; whereas if the inorganic powder of the slurry is selected from a ceramic powder, a ceramic workpiece can be obtained. Similarly, if the inorganic powder of the slurry is a metal-ceramic composite powder, a metal-ceramic composite workpiece can be obtained.

The above and other detailed features and advantages of the present invention can be further understood by referring to the following descriptions and accompanying drawings.

### BRIEF DESCRIPTION OF THE DRAWING

Figs. 1A to 1I are schematic views of a preferred process of the present invention;

Fig. 2A is a perspective view of a three-dimensional workpiece rapid prototyping machine of the present invention;

Fig. 2B is an exploded view of a ceramic prototyping machine of the present invention

Fig. 2C shows the perspective and side views of a reciprocating mechanism and heater of the present invention; and

Fig. 3 is a block diagram showing the control system of the three-dimensional workpiece rapid prototyping machine of the present invention.

### DETAILED DESCRIPTION OF THE INVENTION

The method of making three-dimensional parts according to the present invention comprises the following main steps:
(i) Prepare a slurry (2);
(ii) Form a sacrificial layer (9);
(iii) Sinter a predetermined portion of the sacrificial layer (9) with an energy beam so that it is transformed into a part layer (11); and
(iv) Remove the "sacrificial portion" that is not subjected to sintering.

The steps and relevant equipment/devices are as follows:

### Step I: Prepare a slurry:

At least a polymer powder (1a), a solvent (1b) and an organic binder (1c) are mixed them together to form a slurry (2).

Powder (1a) refers to a polymer powder which does not dissolve in a solvent or a developer/ dispersant. According to a preferred embodiment of the present invention, powder (1a) is a mixture of a polymer powder and an inorganic powder that is not soluble in the solvent or developer. According to a further preferred embodiment of the present invention, powder (1a) comprises an inorganic powder wherein a surface of the inorganic powder ( 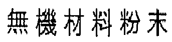 ) is coated with a polymer. According to the above, powder (1a) of the present invention is preferably selected from one of the following: (1) polymer powder which does not dissolve in the solvent or developer/dispersant; (2) a mixture of polymer powder and ceramic powder; (3) a mixture of polymer powder and metal powder; (4) a mixture of polymer powder, metal powder and ceramic powder; (5) ceramic powder coated with a polymer layer; and (6) inorganic powder coated with a polymer layer.

Solvent (1b) can dissolve the organic binder (1c), which not only makes the organic binder (1c) evenly mix with the powder (1a) but also helps to adjust the viscosity of the resultant slurry (2) to an appropriate level. Solvent (1b) is preferably water or an organic solvent such as methyl ethyl ketone (MEK) or toluence.

The organic binder (1c) is soluble in a solvent (1b) and a developer/dispersant (14). After the solvent (1b) is evaporated, the organic binder (1c) can bind the powder (1a) carry a specific shape. After the slurry (2) is paved in a slurry layer (7) and dried and after the solvent is evaporated, the organic binder (1c) is bonded to the powder (1a), thereby forming a solidified sacrificial layer (9). By soaking the solidified sacrificial layer (9) in the developer/dispersant (14), the organic binder (1c) therein will be disintegrated or "demolished". The organic binder (1c) can be a water-soluble organic binder, e.g., polyvinyl alcohol (PVA), starch, cellulose, etc., or a water-insoluble organic binder such as Polyvinyl butyral (PVB).

To obtain the slurry (2), the powder (1a), the solvent (1b) and an organic binder (1c) is mixed in an appropriate proportion and then the mixture is dispersed in mixer (3) or a conventional ball grinder (not shown) for uniform agitation.

The slurry is preferably doped with an additive or additives (1d). This is advantageous in helping the suspending of powder particles in the solvent, improving the uniformity of the slurry (2), increasing the content of the powder in the slurry (2), reducing bubbles and improving the ability to absorb the energy of the laser beam. Examples of appropriate additives (1d) include: dispersing agent, e.g., ammonium polyacrylate, antifoaming agent and light-absorbing agent. Preferably, the additive(s) (1d) and the other composition are incorporated into the mixture in separate steps. For example, it is recommended to first add the dispersing agent into the mixture to disperse the powder (1a), and then add the binder (1c).

### Step II: Form a sacrificial layer:

Pave the slurry (2) in a thin slurry layer (7) on a specified area of a working table (6), as will be explained below. After the slurry layer (7) is dried and solidified, it is a solidified sacrificial layer (9). Preferably, a sacrificial layer forming device (16) is used to make the sacrificial layer (9). The sacrificial layer forming device (16) preferably comprises a layer paving device (4) and a working table (6). The solvent (1b) of a slurry (2) is preferably volatile in the normal atmospheric temperature. To make the slurry layer (7) solidify quickly, the sacrificial layer forming device (16) preferably comprises a heater (8) for heating the slurry layer (7). After each time a previously-formed or "preceding" slurry layer (7) is dried and the solvent (1b) is evaporated or volatilized to form a preceding solidified sacrificial layer (9), another or a "subsequent" slurry layer (7) is applied onto the preceding solidified sacrificial layer (9) and then dried again in a similar measure. These steps are repeated so that various solidified sacrificial layers (9) are laminated atop each other until a green block (13) having a predetermined shape is completed.

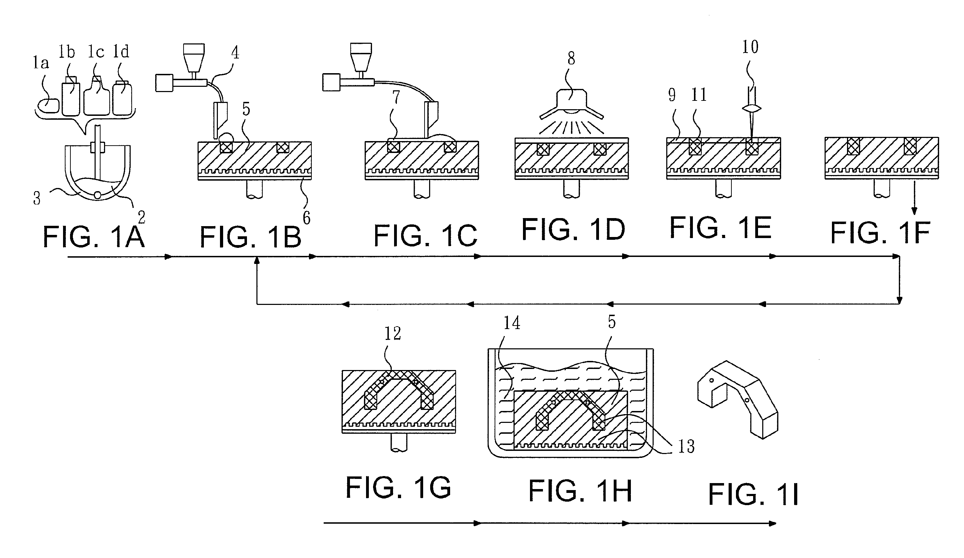

According to a preferred embodiment of the present invention, as illustrated in Fig. 1A, the layer paving device (4) comprises a container for containing slurry (2) so as to allow the slurry (2) to flow down by gravity from an outlet of the layer paving device (4) through a dispensing device such as a tube. The layer paving device (4) is moveable relative to the working table (6) so that the slurry (2) can be paved into a slurry layer (7) on a specified area of the working table (6). Preferably, a film making tool such as blade can be provided to "scrape" the slurry (2) so as to make a slurry layer (7) for forming the green block (13). Most slurries are of high viscosity and have bad fluidity. To solve this problem, the sacrificial layer formingdevice (16) preferably comprises a pressurization device such as a screw (18) for pressure input so that the slurry (2) can be squeezed out through a plurality of outlet holes of a rectangular outlet of a feeder (19).

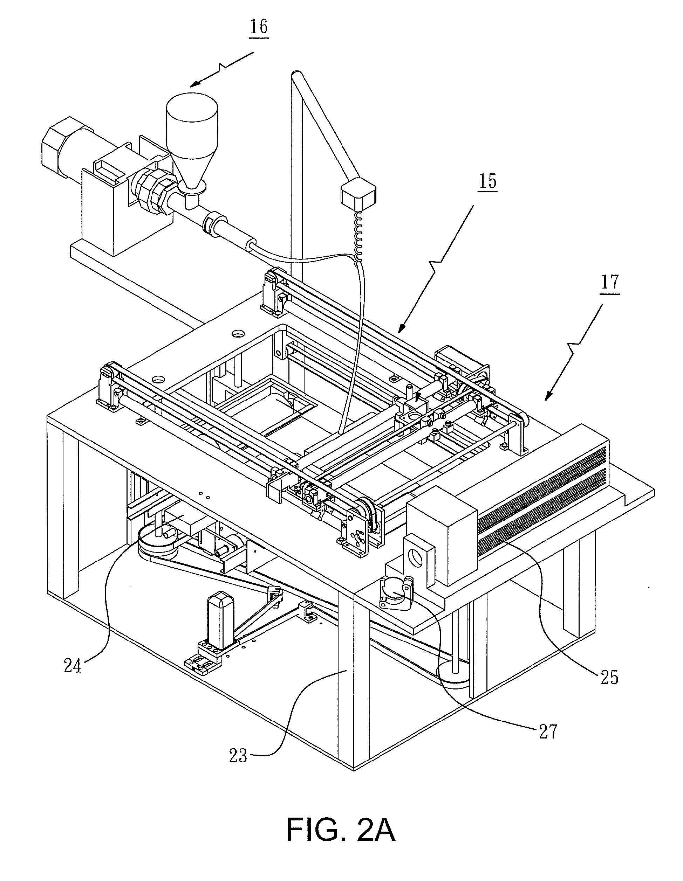

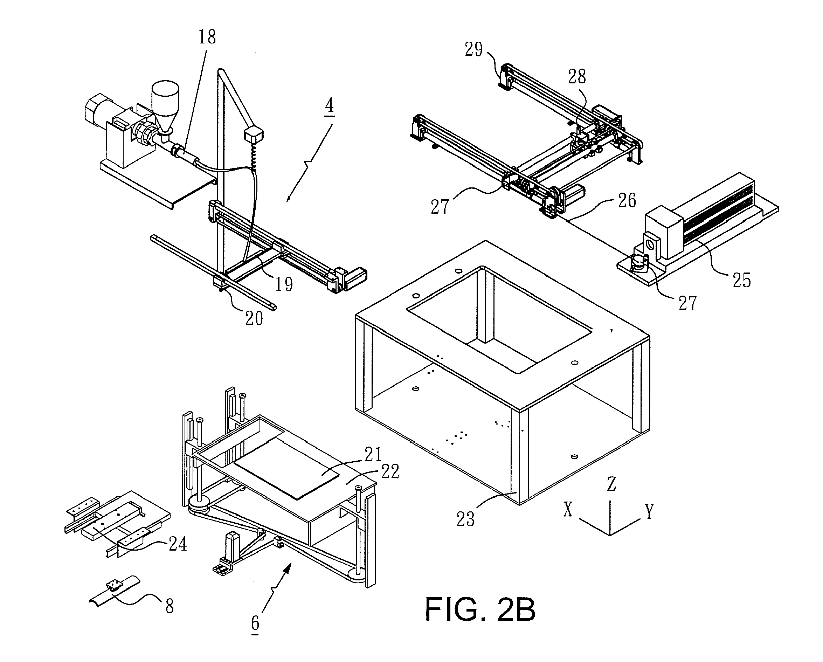

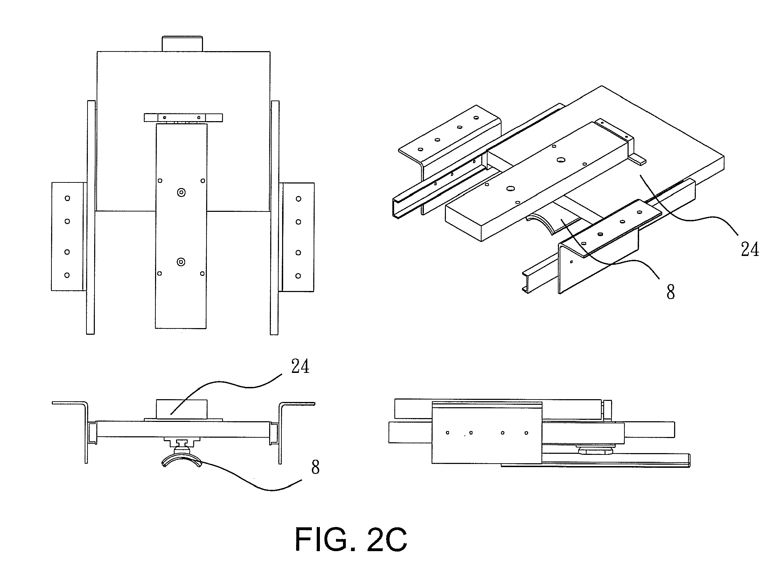

Figs. 2A and 2B illustrate an embodiment of the feeder (19). The operation of the feeder (19) is explained as follows. The outlet end of the feeder (19) has a paving length generally equal to the width of the slurry layer (7). With this structure, the slurry (2) coming out of the outlet is in the shape of a strip. A blade (20) is provided at the rear of the outlet of the feeder (19). The gap between the blade (20) and the green block (13) can be adjusted as desired so as to obtain a desired height of slurry layer (7). During the distribution of the slurry (2), the blade (20) is moved along a length-wise direction of the desired slurry layer (7) to scrape the same and shape it into a strip. By doing this, a slurry layer (7) is formed. Optionally, a flexible tube having a circular outlet can be connected to the rear of the pressurization device (see the tubular element connected between the screw (18) and feeder (19) illustrated in Figs. 2A and 2B). The slurry (2) squeezed out of the outlet holes of the feeder (19) is in a dot-shaped. By linearly moving the circular flexible tube along the width-wise direction of the intended slurry layer (7), the slurry squeezed out of the holes is shaped into a linear shape, with its length generally equal to the width of the slurry layer (7). By linearly moving the circular flexible tube along the width-wise direction of the intended slurry layer (7), the slurry squeezed out of the outlet will be in the shape of an elongated strip, with its length generally equal to the width of the slurry layer (7). Thereafter, the blade (20) is moved along a length-wise direction of the intended slurry layer (7) in an elongated shape to scrape the same for further shaping it. This can also obtain the intended layer (7) with the desired shape.

When the above pressurization device is used to pave the slurry (2) with the blade (20), the slurry is not necessarily pressurized. In another aspect, if the powder in the slurry is fine enough, the slurry paved on the working table (6) will have the effect as if the powder was pressurized. This is because when the slurry (2) is dried, there is capillary pressure in the slurry, which causes the powder particles to stay close to each other and thus increases the packing density of the "solidified sacrificial layer." In a preferred embodiment, if the powder particles have a diameter of 0.35µm, the maximum resultant stress would be about 2Mpa; if the powder particles have a diameter of 0.68µm, the maximum resultant stress would be 1.1 MPa.

The working table (6) of the sacrificial layer forming device (16) preferably comprises a part stand (21) for supporting the green block (13) and an elevator (22) for supporting the part stand (21), wherein the elevator (22) can be moved vertically relative to the working table (6).

The blade (20) applies a scraping force to the slurry (2) during the slurry paving. Advantageously, the aforementioned solidified sacrificial layer (9) has a good strength after the solvent (1b) in the slurry layer is evaporated (7) and the organic binder (1c) is bonded to the powder (1a), so the solidified sacrificial layer (9) can withstand the scraping force from the blade (20) during the slurry paving, which means that when each subsequent slurry layer (7) is paved on a preceding solidified sacrificial layer (9) during the formation of the green block (13), said preceding solidified sacrificial layer (9) will not be damaged by the scraping force.

To make the slurry layer (7) dry quickly, the green block (13) under formation can be heated from above or below. According to a preferred embodiment, heat can be transferred through radiation, e.g., by microwave or infrared ray from above so as to solidifythe slurry layer (7) quickly. The infrared ray preferably has a wavelength greater than 6µm. Alternatively, the slurry layer (7) on the green block (13) under formation can be heated through thermal convection with the aid of the air to help the slurry layer (7) be solidified/cured quickly. According to a further embodiment, the green block (13) can be heated via conduction heat transfer from a place below the part stand (21) such as by an electrically heated wire. This method can provide good drying effect if the green block (13) is not thick since the slurry layer is not far away from the heat source and the green block (13) underneath the slurry layer can store heat so that the drying speed can be enhanced.

### Step III: Sinter the sacrificial layer with energy beam to obtain a part layer (11):

By irradiating or sintering a predetermined portion of the solidified sacrificial layer (9) with an energy beam following the shape of the cross section of the desired three-dimensional workpiece, the irradiated portion or predetermined portion is transformed into a part layer (11) which does not disperse in the developer or dispersant. The part layer (11) constitutes the body of the desired workpiece. Preferably, the energy beam is emitted from an energy beam sintering device (17) including an energy beam generator and an energy beam irradiation device. When the energy beam (10) falls on the sacrificial layer (9), the energy beam (10) interacts with the material on the surface of the sacrificial layer (9) and produces heat. Thereafter, the heat is transferred inward from the surface, and the cross section of the material which subjected to a property transformation due to the irradiation of the energy beam has a certain depth and width. The energy beam irradiation device irradiates the sacrificial layer (9) along a pre-determined path in a way that point overlaps point to form a line, line overlaps line to form a layer, and different layers are laminated atop each other with the irradiated portions on adjacent sacrificial layers atop and connected to each other. In this way, a three-dimensional part (12) is formed. The sintering step can be conducted after each solidified sacrificial layer (9) is formed, or after more than one solidified layer (9) is formed so that the sintering step can be conducted with solidified layers (9) of a sufficient thickness.

The sacrificial layer (9) is a solidified layer with the organic binder (1c) bonded with the powder (1a). By irradiating the sacrificial layer (9) with an energy beam (10), the polymer powder in the powder (1a) can be melted under heat. According to a preferred embodiment of the invention, the polymer powder is a thermoplastic polymer powder, and is mixed with the organic binder (1c) after the thermoplastic polymer powder is melted by heating. After the mixture is solidified it does not dissolve in a developer/dispersant (14). According another embodiment of the invention, the polymer powder is a thermosetting polymer powder, is cross-linked after being melt, and is then adaptable for being mixed with the organic binder (1c). After the mixture is solidified, it does not dissolve in a developer/dispersant (14).

According to a further embodiment of the invention, the sacrificial layer (9) further includes an inorganic powder coated with polymer material. By irradiating the sacrificial layer (9) with an energy beam (10), the polymer coated inorganic powder and adjacent organic binder (1c) can be melted and mixed together, and after solidification a mixture that does not dissolve in a developer/dispersant (14) is formed.

As indicated above, the sacrificial layer (9) forms part layer (11) after it is irradiated by the energy beam (10) along a pre-determined path, and does not dissolve in a developer/dispersant (14). The organic binder (1c) in the non-irradiated portion of the solidified sacrificial layer (9) that is not irradiated by the energy beam (9) is still soluble in the developer/dispersant (14). Therefore, developer/dispersant (14) may consist of solvent (1b) or similar material so as to achieve the purpose of dispersing the sacrificial portion (5). The part layers (11), which constitute the shape of a three-dimensional finished part (12), is not dispersed in the developer/dispersant (14).

Energy beam (10) can be selected from CO2 laser beam or ND:YAG laser beam. Generally, different powders (1a) have different absorbance for CO2 and Nd:YAG laser beams, and the absorbance of the organic binder (1c) also changes when absorbing different laser beams (26). The present invention obtains the three-dimensional finished part (12) by specifically melting or cross-linking the polymer composition with irradiation of an energy beam. If the polymer composition has poor absorbance for certain laser beams, light-absorbing agent can be used to increase the working temperature so as to make it easier for the polymer composition to melt. For example, acrylic and ceramic powders have poor absorbance for Nd:YAG laser beam, and carbon black can be added to the slurry (2) containing acrylic and ceramic powders to absorb the beam and transfer the heat to the acrylic and ceramic powders.

The energy beam irradiation device can be a photo mask projection device which images the cross section of the three-dimensional part to the sacrificial layer (9) with the visible light source which is filtered by the photo mask. The mask can be a light-permeable type (e.g., a photographic plate for projection or a photo mask for liquid crystal. The mask can also be a reflective type (e.g., a micro lens photo mask manufactured by Texas Instruments Incorporated). A reflective mask can withstand a higher energy density. By irradiating the sacrificial layer with a projection device using a mask, the production can be faster. Another version of the energy beam irradiation device may comprise a beam moving device and a beam focusing device. The beam moving device can be a Galvometer or an X-Y table (9). In case of an X-Y table the horizontal movement of the energy beam (10) with respect to the green block (13) can be achieved by either moving the green block (13) while keeping the energy beam (10) static, or moving the energy beam (10) while keeping the green block (13) static. The beam focusing device can either be lens (28) or a mirror. The above techniques are known to the art.

The use of CAD/CAM software can help create a vector irradiation path. An example is as follows. First, draw a three-dimensional view of the finished part with a three-dimensional drawing software. Thereafter, cut the three-dimensional view into various cross-sectional views parallel to each other and develop an NC program for each cross-sectional view so that a complicated three-dimensional machining problem is made two-dimensional and thus simplified. This can avoid the problems occurred in three-dimensional machining including undercut.

The essential process parameters of the irradiation of the energy beam (10) on the sacrificial layer/green layer (9) include the power and irradiation velocity of laser beam (26). The power used in the process of the present invention depends on the photothermal conversion efficiency. If high efficiency CO2 laser beam is used to irradiate on the sacrificial layer including acrylic powder and silica powder, a power of 3W is possible to melt the acrylic powder. The predetermined irradiation velocity is closely related to the property of the material and the slurry paving thickness.

As soon as each cross section of the green block (13)/workpiece is sintered, the distance between the energy beam (10) and the green block (13) bearing said cross section is increased for the pavement of a next slurry layer (7).

### Step IV: Remove the portion of the sacrificial layer (9) that is not subject to sintering:

By repeating the above steps of forming a sacrificial layer (9) and of forming a part layer (11) by irradiating a predetermined portion of the sacrificial layer (9) with an energy beam (10) for a number of times, a green block (13) comprising a desired three-dimensional part portion (12) and a solidified sacrificial portion (5) consisting of the sacrificial layer (9) without being irradiated is obtained. Since the desired three-dimensional part (12), which is a preliminary product of the present invention, is "buried" in or surrounded by the sacrificial portion (5), it can be obtained by removing the sacrificial portion (5).

The removal of the sacrificial portion (5), which is not subjective subjected to laser irradiation or sintering, can be done by soaking it in the developer/dispersant (14) or destroying it by force e.g., ultrasonic vibration force. It is particularly efficient to remove the sacrificial portion (5) by soaking the green block (13) in the developer/dispersant (14) while at the same time applying ultrasonic vibration force is applied.

According to the above, the three-dimensional part (12) portion of the green block (13) cannot be dissolved in the developer/dispersant, while the sacrificial portion (5) of the green block (13) can be dissolved in the developer/dispersant (14). Dispersant (14) can be solvent (1b), such as water or an organic solvent, which can dissolve the organic binder, as indicated above. Dispersant (14) can also be acid or alkaline that can degrade the organic binder.

According to a preferred embodiment of the invention, if the organic binder (1c) is selected from a polyvinyl alcohol, which is soluble in water, the developer/dispersant (14) can be water. That is, when the green block (13) having its organic binder consisting of polyvinyl alcohol is soaked in water, the sacrificial portion (5) will be dissolved as the polyvinyl alcohol is disintegrated or "demolished." The shape of the three-dimensional part (12) portion will remain unchanged. According to another embodiment of the present invention, the green block (13) can be dispersed in a removing container. By filling the removing container with water, providing it with water spray and preferably applying ultrasonic vibration to it, the sacrificial portion (5) can be removed.

According to a further embodiment of the present invention, H2O2-water solution is used as a developer/dispersant (14). As polyvinyl alcohol can be easily dissolved in H2O2 but the PMMA cannot, for a sacrificial portion (5) formed of a slurry including a PVA binder plus ceramic powder coated with PMMA, PVA can serve as a continuous phase and PMMA can serve as a disperse phase, and by placing disposing the green block (13) into H2O2-water solution, the sacrificial portion (5) can be disintegrated. The three-dimensional part (12) portion of the green block (13) will not be dissolved in the H2O2-water solution.

According to the above, examples of the method and apparatus for manufacturing a three-dimensional workpiece are as follows:

### Example of the method for manufacturing a three-dimensional part (12):

The method for making a three-dimensional part (12) comprises the following steps:
A) Prepare a slurry (2) preferably as follows (Fig. 1A). Provide a mixture of water (as solvent (1b)) and Polyacrylic Ammonium (as additive (1d)) in a mixer (3) with an appropriate proportion and blend/agitate the mixture. Add an alumina powder (as powder (1a)) coated with PMMA into the mixture and blend/agitate the mixture. Finally, add a PVA (as organic binder 1c) into the mixture and blend/agitate the mixture. A slurry (2) is then obtained.
(B) Pour the slurry (2) into the layer paving device (4), and then squeeze it out so that it falls down to the working table or the green block (13) thereon (see Fig. 1B).
(C) Move the layer paving device (4) to pave the slurry (2) on the top of the green block (13) to make a slurry layer (7). See Fig. 1C.
(D) Heat the slurry layer (7) with Infra-Red energy using heater (8), as shown in Fig. 1D.
(E) The slurry layer (7) is then dried and cured to form a solidified sacrificial layer (9). Usually, the first-formed layer (9) is thicker e.g., with a 100µm thickness. The subsequent layer (9) laminated on the previously-formed layer (9) has a small thickness, e.g., of 30µm, for making the detailed shape of the desired three-dimensional workpiece. Thereafter, as shown in Fig. 1E, the temperature of the sacrificial layer (9) is raised by the irradiation of laser beam/energy beam (10). In an area covering a specific depth of e.g., 45µm from the surface thereof, the PMMA coating of the alumina powder (1a) and the polyvinyl alcohol which is the organic binder (1c) are melted and together linked with the alumina powder (1a), forming a part layer (11) which cannot be dissolved in water. The irradiation path of the laser is predetermined by computer programs according to the cross sections of the three-dimensional workpiece to be manufactured. The two-dimensional cross sections of any shapes can be obtained by controlling the laser irradiation path. By irradiating the surface vertically with the laser, any article having any complicated shape can be irradiated without any concern about undercut.
(F) Lower the working table (6) to move the green block (13) downward for a distance equal to the thickness of each part layer (11), e.g., 30µm, as shown in Fig. 1F.
(G) Repeat steps (B) to (F) for a predetermined times so as to complete a green block (13) (see Fig. 1G), wherein the green block (13) comprises a part portion (12) and a sacrificial portion (5).
(H) As shown in Figs. 1H and 1I, placing the green block (13) in a removing container containing water (developer/dispersant (14)) so that the sacrificial portion (5) surrounding/enclosing the part portion (12) can be dissolved and a desired ceramic-plastic composite part (12) can be obtained.
The above method is an example of manufacturing a ceramic-plastic composite workpiece, and can be treated with post processing. For example, by burnout the three-dimensional ceramic-plastic composite part (12) to remove the organic material therein and with a further sintering step under 1600C for one hour, an alumina ceramic workpiece of more than 95% density can be obtained.

### Example of the apparatus for manufacturing a three-dimensional part (12):

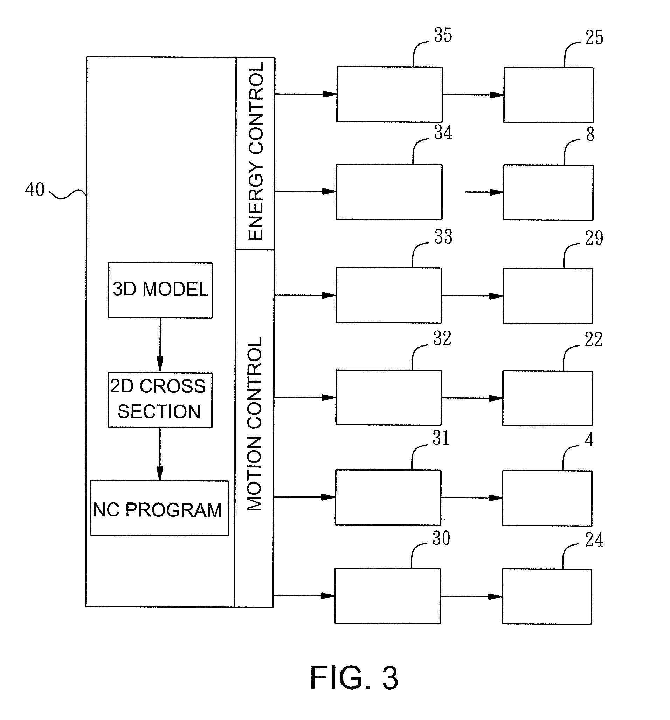

As discussed above, the method of making three-dimensional parts according to the present invention comprises the following main steps: (i) preparing a slurry (2); (ii) forming a sacrificial layer (9); (iii) sintering a predetermined portion of the sacrificial layer (9) with an energy beam so that the sacrificial layer (9) is transformed into a part layer (11); and (iv) removing the portion of the sacrificial layer (9) that is not subjected to sintering. The slurry preparation step can be conducted with a conventional mixer (3). The step of removing the sacrificial layer that is not subjected to sintering is carried out with a container for containing the developer/dispersant (14). Conventional vessels for liquids or supersonic tank are all appropriate containers for the developer/dispersant (14). Steps (ii) and (iii) are repeated for predetermined times, which are preferably controlled by computer. Preferably, a rapid prototyping machine (15) as shown in Figs. 2A, 2B and 3 is used to carry out steps (ii) and (iii). The rapid prototyping machine (15) preferably comprises a sacrificial layer forming device (16) and an energy beam sintering device (17). Fig. 2B is the exploded view of rapid prototyping machine (15). The essential elements of Fig. 2B substantially work in a way as illustrated in Figs. 1B to 1F.

The sacrificial layer forming device (16) comprises a layer paving device (4), a working table (6) and a heater (8). The layer paving device (4) comprises a feeding device and a film making tool. The feeding device preferably comprises a screw (18) and a feeder (19). The feeder (19) is moveable along/relative to the working table (16) in a predetermined manner to dispense the slurry (2) onto the top of the green block (5). The film making tool is preferably a blade (20). The slurry (2) is squeezed out by the screw (18) and dispensed to the top of the green block (5) through the outlet (with a plurality of outlet holes) of the feeder (19) in the form of strips. The blade (20) is arranged at the rear of the feeder (19). The bottom of blade (20) is spaced from the top of the green block (5) by a gap. When the slurry (2) comes out of the feeder (19), the feeder (19) moves together with the blade (20) and the blade (20) "scrapes" the slurry (2) so as to shape it into a film/thin layer. By changing the width of the gap between the bottom of the blade (20) and the top of the green block (13), the thickness of the slurry layer (7) can be changed.

The working table (6) comprises a part stand (21), an elevator (22) and moving means for moving the part stand (21) and the elevator (22). The elevator (22) is supported by a frame (23). The part stand (21) is supported on the elevator (22) and functions for carrying/loading the green block (13). Each time when a preceding sacrificial layer (9) is formed and sintered into a part layer (11) by an energy beam (10), the elevator (22) is lowered for a distance equivalent to the thickness of a slurry layer (7) to facilitate the forming of a subsequent layer.

An infra-red heater (8) is preferably mounted between the frame (23) and the part stand (21), which is moved above the part stand (21) for drying the slurry layer (7) by a reciprocating means (24) when necessary, so as to impart the infra-red energy to the slurry layer (7) to make it dry and solidify quickly.

The energy beam sintering device (17) comprises an energy beam generator and an energy beam irradiation device. The energy beam generator is a CO2 laser (25) which converts electricity to light and emits a laser beam (26). The energy beam irradiation device includes an energy beam guiding device, an energy beam focusing device and an energy beam moving device. The energy beam guiding device preferably includes a reflection mirror or reflection mirrors (27), and more preferably includes a stationary mirror and two moving reflection mirrors (27) to facilitating changing the irradiation path. The energy beam focusing device is preferably a convex lens (28). The energy beam moving device preferably includes an X-Y table which guides the focused laser beam (26) so that it falls on the X-Y plane along a predetermined path according to a command of an NC program, so as to irradiate the sacrificial layer (9) to help shape each cross section of a desired three-dimensional part.

Fig. 3 is a schematic view of a control system of a rapid prototyping machine (15). The rapid prototyping machine (15) is controlled by a heater movement controller (30), a layer paving device controller (31), an elevator controller (32) and an X-Y table controller (33). A heater temperature controller (34) is adaptable for providing/regulating the energy required for drying. A laser controller (35) is provided to switch on or off the laser beam and control the power and pulse frequency of the laser beam. A process computer (40) governs the movement of the above elements and initiates the manufacturing of the three-dimensional part (12). After the shape of a desired three-dimensional part is "captured" into a three-dimensional model in a CAD software such as PRO/E and then the three-dimensional model is sliced into a plurality of cross sections and converted afterwards into an NC program. The process computer first commands the layer paving device controller (31) of the layer paving device (4) to discharge the slurry (2) to the top surface of the green block (13). Then, blade (20) is commanded to scrape or "pave" the slurry (2) at a speed controlled by the layer paving device controller (31) so as to form a slurry layer (7). Thereafter, when a drying step is needed, the process computer (40) commands the heater movement controller (30) of the heater (8) to move the heater (8) to a position above the top of the green block (13) under the aid of a reciprocating mechanism (24) so that the heater (8) can impart infra-red energy, regulated by a heater temperature controller (34), to the slurry layer (7) for drying and curing the same quickly to form a sacrificial layer (9). Thereafter, the laser controller (35) and the X-Y table controller (33) are coordinated according to the NC program so as the laser beam (26) will irradiate/sinter the sacrificial layer (9) into a part layer (11). After the laser irradiation, the elevator controller (32) is commanded to lower the elevator (22) to carry out the same steps for a subsequent cross section of the three-dimensional model. The above steps are repeated until the three-dimensional part is finished.

It is appreciated that the present invention comprises the following unique features and advantageous as compared to the conventional methods such as the Selective Laser Sintering (SLS) method:
1. The SLS method uses only a single linking mechanism, e.g., thermal melting by laser, to link the composition (the powder such as the polymer powder) in the sacrificial layer. By contrast, the present invention provides adhesive bonding in addition to thermal melting to facilitate linking of the composition. With the adhesive bonding effect, the present invention can produce a solidified sacrificial layer which is thinner than that produced according to the SLS method.
   Specifically, when the slurry is paved on a preceding part layer to form a subsequent sacrificial layer thereon, the thinner the slurry, the greater the force applied to the preceding part layer. In this regard, according to the conventional methods, which do not use adhesive bonding, a preceding sacrificial layer is in powder form. It is formed by only paving dry plastic particles, dry ceramic particles, dry metal particles, or dry composite particles. When a subsequent dry powder layer is paved on a preceding part cross section, which is transformed by a laser scanning and suspended in the sacrificial portion, the preceding part cross section will be easily moved by the scraping force due to poor bonding to sacrificial portion. In contrast, the adhesive bonding provided by the present invention allows the sacrificial layer to withstand the scraping force resulting from the pavement of the slurry so that the part portion and the sacrificial portion will not be moved. Therefore, the present invention allows each layer to be made very thin, e.g., with a thickness of 10µm. Accordingly, a three-dimensional part made according to the method of the present invention is more precise (with high resolution along the vertical axis of the three-dimensional part) than one made with the conventional methods.
2. The slurry of the present invention is a mixture of powder and water or of powder and organic solvent. The powder can be as small as miniscale (mm) or as microscale (µm) or a mixture of different scales. Accordingly, even though the present invention uses a powder of oversized particles, the layer can still be made very thin without limiting the lowermost limit of the thickness. This advantageously minimizes the ladder effect caused by the lamination of layers. Meanwhile, by using the slurry pavement, the present invention allows the use of fine powders so that it can improve the roughness of the surface. For example, a surface roughness of Ra=1.5µm can be achieved. With the above two advantages, there is less need to post-process the completed three-dimensional part.
   In contrast, the conventional SLS method relies on the use of dry powders. The use of large-sized particles of the powder, e.g. one with a size greater than 30µm, facilitates the paving and enhances the fluidity of the slurry. However, as long as the size of the powder articles is small, e.g., smaller than 20µm, the slurry has poor fluidity.
3. The slurry of the present invention is a mixture of powder and water or of powder and organic solvent. Dispersing agent can be doped into the mixture to help the fine powder disperse evenly and to produce capillary pressure. In case of fine powder particles, the capillary pressure can be increased to consolidate the powder and increase the density of the green block. By doing this, the average pore size existing in green block can be minimized, and the pore size distribution in green block can be reduced. This facilitates dense sintering which can produce a three-dimensional part with high strength and density. The conventional SLS method relies on dry powders and the three-dimensional part thus formed does not have the above advantages, which means that the three-dimensional part is not dense enough.

In summary, the present invention can be broadly applied to the manufacture of plastic, metal and ceramic workpieces without the aforementioned limitations defects of conventional methods such as the SLS method. The present invention can use fine powders and the layer can be made very thin. Accordingly, compared with the conventional method such as the SLS method, the present invention can produce a workpiece with improved surface roughness, delicate texture and greater strength. Post-process can often be omitted.

Compared to US Patent No. 6,217,816, the present invention can be used to manufacture a workpiece of different compositions, such as polymer workpiece, metal workpiece, ceramic workpiece and composite workpiece, and the workpiece has a better strength.
In summary the invention discloses a method and apparatus for fabricating three-dimensional parts using a slurry. The slurry comprises at least a polymer, an organic binder and a solvent. The process is characterized in paving the slurry to form a sacrificial layer, and drying the same so that it is in the form of a solid state. The sacrificial layer can be soaked in a developer for being disintegrated therein. On the other hand, if the sacrificial layer is irradiated with an energy beam, it will be transformed into a part layer which does not dissolve in the developer. During manufacture of a three dimensional part, by repeating the above steps, a preliminary three dimensional part surrounded by a sacrificial portion constituted of a plurality of sacrificial layers without being irradiated can be obtained. A developer is used to separate the sacrificial portion from the preliminary three-dimensional part so as obtain the resultant three-dimensional part. According to a preferred embodiment of the present invention, if the slurry further comprises a metal powder or a ceramic powder, the resultant three-dimensional part can be further processed to remove the organic component so as to obtain a three-dimensional semi-product consisting of mainly inorganic component. By processing inorganic component of the three-dimensional semi-product with a high temperature densification sintering step, a final three-dimensional part consisting of ceramic, metal or ceramic-metal composite with a high strength can be obtained.

All the above descriptions are intended to demonstrate the preferred embodiments of the present invention rather than limit the present invention. Since the present invention is not limited to the specific details described in connection with the preferred embodiments, changes to and implementations of certain features of the preferred embodiments without altering the overall basic function of the invention are contemplated within the scope of the appended claims.

## Claims

1. A method for making three dimensional parts, comprising the steps of:
(i) Providing a powder mixture containing at least a polymer powder (1a), a solvent (1b), an organic binder (1c) and a developer (14), wherein said polymer powder does not dissolve in said solvent or said developer, and wherein said organic binder can dissolve in said solvent and said developer;
(ii) Preparing a slurry by mixing said powder mixture (1a), said organic binder (1c) and said developer/dispersant (14) together;
(iii) Paving said slurry on a specified area of a working table to form a slurry layer (7) thereon;
(iv) Drying said slurry layer to evaporate the solvent (1b) so as to form a solidified sacrificial layer (9);
(v) Irradiating a pre-determined portion of said solidified sacrificial layer (9) with an energy beam along a pre-determined path so that an irradiated portion thereon is transformed into a part layer (11) which is not dissolved in said developer (14) because the irradiation makes the powder mixture (1a) in said irradiated portion melt/cross-linked and mixed with said organic binder (1c), wherein said part layer (11) has a cross section of a green three-dimensional workpiece;
(vi) Repeating steps (iii)-(v) so that a subsequent slurry layer (7) is laminated on a preceding layer and then dried and irradiated to form a subsequent layer, until a green block containing a predetermined shape of workpiece is completed, said green block comprising a solidified sacrificial portion corresponding to a non-irradiated portion of said solidified sacrificial layer (9) that is not irradiated by said energy beam;
(vii) Removing said non-irradiated portion of said green three-dimensional workpiece at least by disposing said green three-dimensional workpiece in a developer (14) which dissolves the non-irradiated portion so as to obtain a finished three-dimensional workpiece.

2. The method of Claim 1, wherein the powder mixture in step (i) contains at least a polymer powder which does not dissolve in said solvent (1b) or said developer (14), and an inorganic powder (1a) which does not dissolve in said solvent (1b) or said developer (14).

3. The method of Claim 1, wherein the powder mixture in step (i) is formed by coating a polymer onto a surface of an inorganic powder, both of said polymer and said inorganic powder do not dissolve in said solvent (1b) or said developer (14).

4. The method of Claim 2, further comprising the following step:
(viii) Removing the organic composition in said green three-dimensional workpiece in a furnace and then processing said workpiece with high temperature sintering so as to obtain a dense inorganic workpiece.

5. The method of Claim 1, wherein said organic binder is selected from the group consisting of water-soluble organic binder and water-insoluble organic binder.

6. The method of Claim 2, wherein said organic binder is selected from the group consisting of water-soluble organic binder and water-insoluble organic binder.

7. The method of Claim 1, wherein said removing step (vii) for removing said non-irradiated portion of said green three-dimensional workpiece is further proceeded by destroying said non-irradiated portion by force.

8. The method of Claim 2, wherein said removing step (vii) for removing said non-irradiated portion of said green three-dimensional workpiece is further proceeded by destroying said non-irradiated portion by force.

9. An apparatus for making three-dimensional parts with a slurry, comprising:
a sacrificial layer making apparatus (16), comprising:
a layer paving device (4) and a working table (6), said layer paving device (4) being moveable relative to said working table for repeatedly paving said slurry on said working table so as to form slurry layers which are laminated on each other;
an energy beam sintering device (17), comprising:
an energy beam generator for generating an energy beam;
an energy beam irradiation device for guiding said energy beam to irradiate on said sacrificial layer along a pre-determined path;
wherein:
said layer paving device (4) comprises:
a feeder (19) moveable relative to said working table for dispensing said slurry onto a target location, said feeder being provided with an outlet comprising a plurality of slurry outlet holes;
a film making tool for shaping the slurry from said slurry outlet holes into a thin layer.

10. The apparatus for making three-dimensional parts of Claim 9, wherein:
said outlet of said feeder (19) of said layer paving device (4) being in a rectangular shape, and said outlet having a paving length substantially equivalent to the width of said slurry layer.
